# EUROPÄISCHE PATENTSCHRIFT

(11) **EP 2 828 959 B1**
(45) Veröffentlichungstag und Bekanntmachung des Hinweises auf die Patenterteilung: **07.11.2018**
(21) Anmeldenummer: 13713120.7
(22) Anmeldetag: 19.03.2013
(51) Int. Cl.: H02K 21/12, H02K 41/03

(54) **SEGMENTIERTER MOTOR/GENERATOR MIT TRANSVERSALER FLUSSFÜHRUNG, HOHEM SCHUBMOMENT UND KLEINER MASSENTRÄGHEIT**
SEGMENTED MOTOR/GENERATOR WITH TRANSVERSAL FLOW GUIDANCE, HIGH THRUST TORQUE AND SMALL MASS INERTIA
MOTEUR/GÉNÉRATEUR SEGMENTÉ COMPRENANT UN GUIDAGE DE FLUX TRANSVERSAL, UN MOMENT DE POUSSÉE ÉLEVÉ ET UNE FAIBLE INERTIE DE MASSE

(30) Priorität: 19.03.2012 DE 102012005688
(43) Veröffentlichungstag der Anmeldung: 28.01.2015
(73) Patentinhaber: Ortloff, Helene, 6512 Giubiasco (CH)
(72) Erfinder: ORTLOFF, Peter, CH-6512 Giubiasco (CH)
(74) Vertreter: Becker Kurig Straus
(86) Internationale Anmeldenummer: PCT/EP2013/055655
(87) Internationale Veröffentlichungsnummer: WO 2013/139774

(56) Entgegenhaltungen:
- EP-A1- 1 005 136
- WO-A2-2011/103869
- DE-A1- 4 300 440
- DE-A1- 4 314 513
- DE-A1-102010 046 309
- DE-B3-102008 022 143

## Beschreibung

Die vorliegende Erfindung betrifft allgemein einen bürstenlosen Gleichstrommotor und/oder Generator und insbesondere eine bürstenlose hochpolige, mehrphasige Transversalfluss-Maschine mit Permanentmagneten. Die Erfindung betrifft weiterhin einen Motor/Generator mit hohem Wirkungsgrad und hoher Effizienz bzw. einen Hochleistungssynchron-Motor/Generator mit transversaler Flussführung, hohem Drehmoment und kleiner Massenträgheit, dessen einzelne Pole mit Versatz in der zurücklaufenden Wicklung segmentiert sind.

Transversalflussmaschinen ermöglichen es im Vergleich mit herkömmlichen Maschinen gleichen Bauvolumens eine wesentlich höhere Momentendichte zu erzielen. Dies beruht darauf, dass bei Transversalflussmaschinen eine Erhöhung des Drehmomentes durch Erhöhung der Polzahl und der Magnetflussdichte erreicht werden kann. Bei den Transversalflussmaschinen ist der magnetische Fluss im Gegensatz zu herkömmlichen elektrischen Maschinen nicht longitudinal sondern transversal gerichtet. Das heißt, dass das elektrische Feld und das magnetische Feld um 90° gegeneinander verdreht sind.

Eine Transversalflussmaschine wird beispielsweise in der EP 1 005 136 A1 beschrieben, bei der durch eine spezielle Ausgestaltung der U-förmigen und I-förmigen Joche die Streuwege reduziert werden, sodass der Drehschub höher ist. Eine andere Ausführungsform einer Transversalflussmaschine, die fertigungstechnisch einfacher herstellbar ist, zugleich einen möglichst hohen Wirkungsgrad und ein möglichst hohes Drehmoment besitzt, ist auch aus der DE 10 2006 038 576 bekannt.

Erkauft wird das höhere Schubmoment bei Transversalflussmaschinen durch eine Konstruktion, welche aus sehr vielen Einzelteilen besteht. Durch die leicht herstellbaren Ringwicklungen und der möglichen automatisierbaren Montage der vielen Einzelteile überwiegen aber die Vorteile.

Die Aufgabe der vorliegenden Erfindung ist es, einen Transversalflussmotor/- Generator bereitzustellen, der wirtschaftlich herstellbar ist, einen hohen Wirkungsgrad und ein hohes Drehmoment, d.h. das Drehmoment gegenüber bekannten Konstruktionen weiter zu steigern, aufweist. Ein Aspekt der Erfindung ist es insbesondere, den Fertigungsprozess zu vereinfachen und die Herstellungskosten zu reduzieren. Der erfindungsgemäße Transversalflussmotor/Generator ist insbesondere für Anwendungen geeignet, die einen geringen Bauraum erfordern und zugleich jedoch ein hohes Schubmoment verlangen.

In der DE4300440A1 wird eine Transversalflussmaschine gelehrt, wobei viele Statorelemente, im Besonderen U-Profile als Joche so geformt sind, dass die Pole jedes U-Profils um eine Polteilung in Bewegungsrichtung der Magnete des Rotors verschoben sind. Auch ist eine zweireihige Magnetreihe vorgesehen. Dieser Aufbau kann mehrere Segmente umfassen.

In der WO20111103869A2 wird eine Transversalflussmaschine gelehrt, bei der eine Magnetreihe doppelt genutzt wird. Dabei sind Joche (Stator) auf beiden Seiten der rotierenden Magnete angebracht.

In der DE4314513A1 wird eine Transversalflussmaschine mit optimierter Kraftdichte gelehrt.

Die erfindungsgemäße Aufgabe wird durch eine mehrphasige, segmentierte Synchromaschine mit transversaler Flussführung nach Anspruch 1 gelöst.

Gemäß einer Ausführungsform der vorliegenden Erfindung sind die Magnete derart angeordnet, dass von zwei Phasen eine Magnetreihe genutzt wird. und dabei Magnetmaterial einspart wird. Mittels der Magnetkonzentratoren wird zugleich eine Einsparung der magnetischen Flussleitmaterialen erzielt. Die magnetischen Flussleitmaterialien können insbesondere durch gespritzte MIM-Technologie (Metal Injection Molding) als grüne Materialien hergestellt sein oder es können gesinterte Materialien als Magnetflussleitmaterialien eingesetzt werden.

Gemäß einer Ausführungsform der vorliegenden Erfindung bestehen die Magnetflussleitmaterialien aus weichmagnetischen Bändern, die mit Bindemittel zusammengefügt sind. Die Magnetflussleitmaterialien aus weichmagnetischen Bändern sind ferner insbesondere mit einem Kunststoff zur Stabilisierung und Schutz umhüllt und der Stator ist vorzugsweise mit einem wärmeleitenden Kunststoff umspritzt.

Gemäß einer Ausführungsform der vorliegenden Erfindung ist die Feldstärke in den Magnetflussleitmaterialien durch die Magnetkonzentratoren verstärkt.

Gemäß einer Ausführungsform der vorliegenden Erfindung werden die Magnetanordnung durch zwei Anordnungen von Jochelementen gemeinsam genutzt, so dass sich die Kraft bzw. das Drehmoment der Maschine im Wesentlichen ungefähr verdoppelt bzw. um ungefähr 90% gesteigert ist.

Gemäß einer Ausführungsform der vorliegenden Erfindung besteht die Maschine aus zwei oder mehreren miteinander verbundenen Rotorringen, auf denen Magnete mit wechselnder Polung (Magnetpole) aufgebracht sind. Aufgrund ihres Aufbaus weisen die zwei oder mehreren miteinander verbundenen Rotorringen mit Magnetpolen vorzugsweise eine besonders große, aktive und nutzbare Magnetfläche auf. Gemäß einer Ausführungsform der vorliegenden Erfindung kann der segmentierte Aufbau der Maschine sehr einfach in mobile Fahrzeuge integriert werden.

Gemäß einer Ausführungsform der vorliegenden Erfindung stellen die ausgeführten Maßnahmen eine Gewichtseinsparung insbesondere beim Einsatz in Windkraftanlagen im MW-Bereich in beträchtlichem Umfang dar.

Erfindungsgemäß weisen die Breite der Poleneden der Jochelemente und die Breite der Magnete in einer Längssicht entlang der Bewegungsrichtung ein Verhältnis von ungefähr 0,7 auf, wobei die Kanten der Jochschenkel eines U-förmigen Jochelements im Bereich der Polenden eine im Wesentlichen polygon-förmige Formgebung aufweisen, damit eine Verdichtung der Magnetfelder vermieden wird.

Die Erfindung wird aus der nachfolgenden Beschreibung und den beigefügten Zeichnungen besser verstanden werden, die nur beispielhaft angegeben werden und somit die Offenbarung nicht beschränken sollen.
Fig. 1 zeigt beispielhaft das Prinzip eines bürstenlosen GleichstromMotors/Generators in segmentierter Bauweise mit einer Phase;
Fig. 2 zeigt beispielhaft das Prinzip der Doppelnutzung der Magnete und des Magnetkonzentrators in einem bürstenlosen Gleichstrom-Motor /Generators in segmentierter Bauweise;
Fig. 3 zeigt beispielhaft einen Querschnitt durch einen erfindungsgemäßen bürstenlosen Gleichstrom-Motor mit umgeklappt angeordneten Segmenten; und
Fig. 4a bis 4d zeigen verschiedene Formgebungen von erfindungsgemäßen Jochelementen.

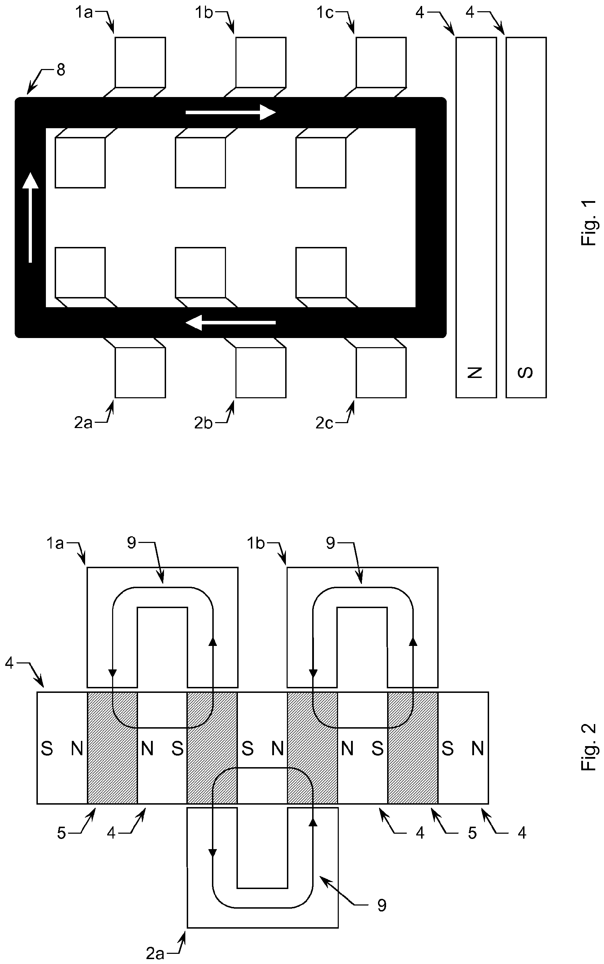

Fig. 1 zeigt beispielhaft das Prinzip eines bürstenlosen GleichstromMotors/Generators in segmentierter Bauweise mit einer Phase in schematisch vereinfachter Darstellung. Phasenversetzte Jochelemente 1a, ..., 1c, 2a, ..., 2c weisen eine U-förmige Formgebung aus weichmagnetischem Material auf und umschließen eine transversale Spule/Wicklung 8. Die Magnete 4 werden bei Bestromung (siehe Pfeile) im Motorbetrieb über die Joche gezogen bzw. erzeugen eine Spannung im Generatorbetrieb, wenn die Magnete 4 über die Jochelemente 1a, ..., 1c, 2a, ..., 2c bewegt werden. Das in Fig. 1 beispielhaft gezeigte Prinzip verwendet die Magnete 4 ohne Doppelnutzung und illustriert eine von mehreren Ausführungen. Im rücklaufenden Teil der transversalen Spule 8 sind die phasenversetzen Jochelemente 2a, ..., 2c angeordnet.

Je nach Konstruktion wird zwischen einseitigen Transversalflussmaschinen, bei denen nur auf einer Seite der Permanentmagnete die Wicklung umschließenden Jochelemente zum Führen des magnetischen Flusses angeordnet sind, und zweiseitige Transversalflussmaschinen unterschieden, bei denen beiderseits der Permanentmagnete Jochelemente angeordnet sind.

Die Hochleistungssynchronmotoren haben gegenüber normalen EC-Motoren einen um 2/3 kleineren Wicklungsbedarf, da die Wicklung komplett im Magnetkreis liegt und durch die doppelte Nutzung der Permanentmagnete eine um bis zu 50% niedrigere Magnetmasse. Dieser Aufbau reduziert gleichzeitig die notwendigen Magnetflussleitmaterialien und damit das Gewicht. Die Transversalfluss-Generatoren/Motoren mit einem doppelten Schubmoment verringern durch die Zweifachnutzung des Magnetmaterials das Volumen erheblich.

Die Materialeinsparung bei erhöhtem Wirkungsgrad erniedrigt zusätzlich das Massenträgheitsmoment. Die Erfindung betrifft rationell herstellbare Transversalfluss-Motoren/Generatoren mit reduziertem Materialbedarf, deutlich verringertem Gewicht und erhöhtem Wirkungsgrad. Die Energiedichte kann bis zu dreimal höher sein als bei Torque-Motoren/Generatoren.

Anwendungsbeispiele für derartige erfindungsgemäße Transversalfluss-Motoren/Generatoren sind beispielsweise Supersynchronmotoren, die insbesondere zum Einbau in Rohren mit kleinem Durchmesser, ähnlich Pneumatikzylinder, Rollenantrieben oder als Spindelmotoren geeignet sind, wobei die Länge der Motoren bei diesen beispielhaften Anwendungsbeispielen von nebengeordneter Bedeutung ist. Ein wesentlicher Aspekt ist insbesondere möglichst eine niedrige Geschwindigkeit bei einem hohen Drehmoment zu realisieren, ohne dass ein Getriebe benötigt wird. Ein weiteres Anwendungsbeispiel ist der Bau eines Motors/Generators im Schutzblech eines Fahrrads, wobei das Rad als Rotor dient. Ein weiteres Anwendungsbeispiel ist ein Linearmotor/Generators. Hier wird der Schwerpunkt vor allem in Werkzeugen mit langsamen Bewegungen bei hoher Kraft ohne Getriebe und geringeres Gewicht in Werkzeugmaschinen Wert gelegt, wobei zugleich eine hohe Dynamik gefordert wird und notwendig ist. Weitere Anwendungsbeispiele sind Außenläufermotoren und Kleinmotoren, welche direkt mit Netzspannung betrieben werden können, Supersynchronmotoren in Kurvenbahnen mit hoher Wegpräzision und dergleichen. Entwicklungsaufgabe und Lösungen

Aus den vorstehend genannten Gründen bestand die Aufgabe darin, einen elektrischen Motor/Generator zu entwickeln, welcher folgende Verbesserungen aufweist: Langsame Bewegungen
- wird erreicht durch eine hohe Polzahl mit kleinen Wegen pro Schritt;
Hohes Schubmoment und eine hohe Leistung pro Gewichtseinheit
- wird erreicht durch eine hohe Polzahl mit kleinen Magneten;
- wird erreicht durch eine bessere Ausnutzung der Magnetfläche;
   und/oder
- wird erreicht durch eine hohe Luftspaltinduktion.
Hoher Wirkungsgrad bei langsamem Lauf bzw. geringer Drehzahl
- wird erreicht durch eine hohe Polzahl und Begrenzung der magnetischen Sättigung. Damit werden ein hoher Wirkungsgrad, geringe Wärmeverluste durch Stromfluss, geringe Eisenverluste und eine große wirksame Magnetoberfläche erzielt.

Dies wird erreicht durch die doppelte Ausnutzung der Magnetfläche, was einer Verdoppelung des nutzbaren Magnetfeldes entspricht.
Vereinfachte Produktion
- wird erreicht durch Spritzgießen von Magnetflussmaterialien; und/oder
- wird erreicht durch eine automatisierte Wickeltechnik.
Ein geringer Verdrahtungsaufwand trotz hoher Polpaarzahl
- wird erreicht durch nur eine Wicklung pro Phase.
Die Motor/Generator soll ein geringes Trägheitsmoment haben
- ein kleines Schubmassenträgheitsmoment mit einer höheren Flussstärke durch Verringerung der Magnetmasse.
Der Motor/Generator soll eine höhere Leistung und Schubmoment haben
- durch den kompakten Aufbau der Spule aus Rechteck- und/oder Blech Material wird der Kupferfüllgrad und damit die Leistungsdichte erhöht; und/oder
- durch Verwendung von NdFeB-Magnete und den Gewinn der Magnetfläche erhöht sich der Wirkungsgrad deutlich.
Weitere erfindungsgemäße Ausführungsformen

Durch Erhöhung des Kupferfüllgrades kann im Vergleich zu runden Drähten von einem Füllgrad von ungefähr 65% auf ungefähr 96% durch Verwendung von flächigem Material (Blechen) für die transversale Spule 8 die Leistung erhöht werden. Durch einen doppelseitigen Aufbau der Magnetstruktur kann die Leistung durch Verdoppelung der nutzbaren Magnetfläche um ungefähr 90% erhöht werden,

Einen wesentlichen Anteil an den Gesamtverlusten eines erfindungsgemäßen Motors/Generators sind Verluste, die durch den Widerstand der Spule bedingt sind. Da der Widerstand durch die starke Erhöhung der nutzbaren Leitungslänge aufgrund der vorstehend und nachfolgend beschriebenen Maßnahmen niedriger ist, verringern sich die ohmschen Verluste.

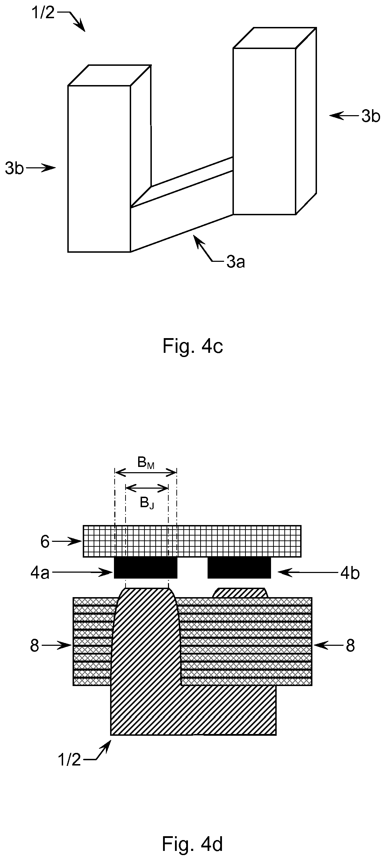

Aus Simulationen zeigt sich, dass insbesondere die Formgebung der Polenden der erfindungsgemäßen Jochelemente optimiert werden können. So zeigt sich, dass ein Verhältnis der Polbreite zur Magnetbreite von ungefähr 0,7 (siehe hierzu auch Fig. 4d) anzustreben ist. Um die Sättigungsneigung zu reduzieren, sind weiterhin die Kanten im Bereich der Polenden der erfindungsgemäßen Jochelemente entsprechend einer polygonen Form abgerundet ausgebildet. Bei derartigen polygon-förmigen Kanten bilden sich keine Magnetfeldverdichtungen aus und die Feldstärke ist beim Übergang geringer.

Fig. 2 zeigt beispielhaft das Prinzip des Magnetkonzentrators und der Doppelnutzung der Magnete in schematisch vereinfachter Darstellung. Wie aus der vorstehend beschriebenen Fig. 1 erkannt werden kann, sind beim Betrieb des bürstenlosen Gleichstrom-Motors/Generators immer ungenutzte Teile der Magnete vorhanden. Um dies zu vermeiden, kann eine Doppelnutzung der Magnete erfolgen, die mit einer höheren Energiedichte einhergeht. Die Doppelnutzung, hier ebenso auch als Magnetkonzentrator bzw. Magnetkonzentratortechnik bezeichnet, ermöglicht hierbei höhere Energiedichten, sodass eine deutlich höhere Leistung gegenüber anderen Techniken erhalten wird.

Hierzu sind beidseitig der Magnetanordnung umfassend die Magnete 4 und das Magnetflussleitmaterial 5 (in Reihe abwechselnd miteinander angeordnet, wobei die Polungen der Magnete ebenfalls abwechselnd entgegengesetzt ausgerichtet sind) Jochelemente 1a, 1b, 2a angeordnet, in denen sich entsprechend der Polung der Magnete ein magnetischer Fluss 9 ausbildet. Das Jochelement 1a bzw. 1b und das Jochelement 2a sind auf gegenüberliegenden Seiten der Magnetanordnung angeordnet.

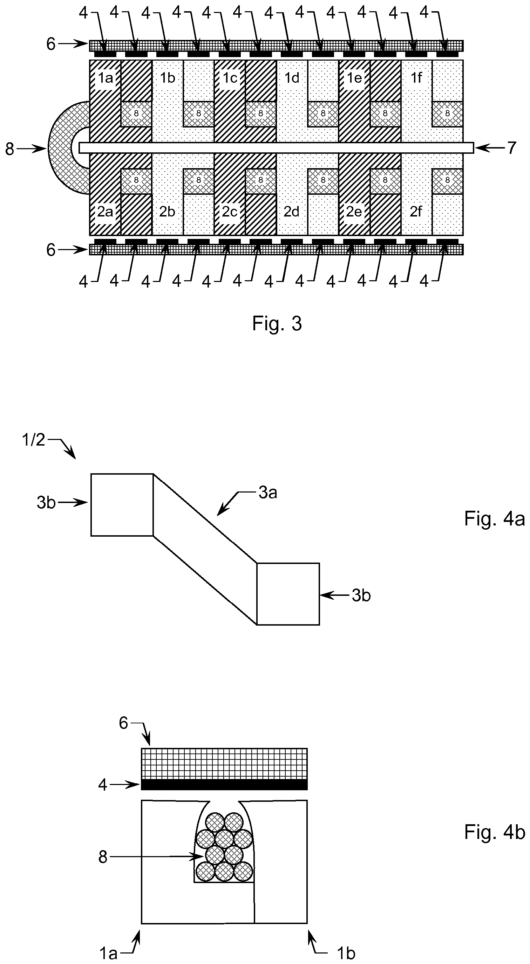

Fig. 3 zeigt ein Prinzip eines möglichen Aufbaus des erfindungsgemäßen Motors/Generators mit zwei außenliegenden Magnetringen als Beispiel für eine Ausführungsform der vorliegenden Erfindung. Eine weitere alternative erfindungsgemäße Ausführungsform ist der Aufbau mit einem innenliegenden Magnetring mit Doppelnutzung der Magnete entsprechend dem vorstehend beschriebenen Prinzip, wodurch eine Einsparung von Magnetmaterial erhalten wird.

Fig. 3 zeigt die Jochelemente 1a, ..., 1f und 2a, ..., 2f mit Phasenversatz, die Unterseite an Unterseite auf einem Träger 7 angeordnet sind. Eine transversale Spule 8 wird durch die Jochelemente eingefasst. Magnete sind jeweils an den Polenenden in Form von zwei Magnetanordnungen vorgesehen. Die Magnetanordnungen umfassen jeweils ein Rückschlussblech 6, auf dem in dieser beispielhaften Ausführungsform einzelne Magnete für jeden Schenkel der U-förmigen Jochelemente oder für jedes Polende jedes Schenkels der U-förmigen Jochelemente aufgeklebt sind.

Die Ausführungen in den Figuren 4a bis 4d zeigen verschiedene Formgebungen von erfindungsgemäßen Jochelementen.

Fig. 4a zeigt eine Aufsicht auf ein erfindungsgemäßes U-Jochelement 1/2 mit einer Brücke bzw. Steg 3a zwischen Schenkeln 3b, die entsprechend der magnetisierenden Permanentmagnete (nicht dargestellt) eine Nord- bzw. Südpol-Magnetisierung aufweisen. Zur Steigerung des Drehmomentes sind die Pole des U-Jochelements verbreitert als Polschuhe ausgeführt, wie dies in der nachfolgend beschriebenen Fig. 4b zu entnehmen ist. Durch diese Verbreiterung wird die drehmomentwirksame Oberfläche vergrößert und die Flussdichte im Luftspalt verringert. Wie aus Fig. 4a bzw. der nachfolgend beschriebenen Darstellung des erfindungsgemäßen Jochelements in Fig. 4c entnommen werden kann, sind die Jochschenkel 3b mit einer bezüglich ihrer Transversalebenen schräg verlaufenden Brücke bzw. Steg 3a versehen. Die schräg verlaufende Brücke bzw. Steg 3a bildet Jochelemente mit einem Phasenversatz. Vorzugsweise sind die Schenkel 3b eines Jochelements mit einem Phasenversatz um eine Polteilung durch einen entsprechend ausgebildeten schräg verlaufende Brücke bzw. Steg 3b versetzt.

Fig. 4b zeigt eine Seitenschnittansicht erfindungsgemäßer Jochelemente 1a und 1b mit einer transversalen Wicklung 8 und einem Magneten 4 mit Rückschlussblech 6. Wie aus der Seitenansicht entnommen werden kann, sind die Pole des U-Jochelements verbreitert als Polschuhe ausgeführt, die sich in den Innenbereich der U-förmig ausgebildeten Jochelemente 1a und 1b erstrecken. Der Magnet 4 erstreckt sich im gezeigten Ausführungsbeispiel über jeweils ein Polende der erfindungsgemäßen Jochelemente 1a und 1b. Die transversale Wicklung 8 ist hier beispielhaft durch eine Vielzahl von Rundleitungen angedeutet. Wie vorstehend beschrieben kann die transversale Wicklung 8 jedoch auch aus flächigen Elementen wie beispielsweise Blechelemente ausgebaut sein.

Fig. 4c zeigt eine vereinfachte schematische, dreidimensionale Darstellung eines erfindungsgemäßen Jochelements mit einer Brücke bzw. einem Steg 3a zwischen beiden Jochschenkeln 3b, die entsprechend der magnetisierenden Permanentmagnete (nicht dargestellt) eine Nord- bzw. Südpol-Magnetisierung aufweisen.

Fig. 4d zeigt eine Seitenansicht eines erfindungsgemäßen Jochelements 1/2 und der transversalen Spule/Wicklung 8. Diese Teile bilden den Stator. Der Rotor umfasst die Magnete 4 mit abwechselnder Nordpol-/Südpol-Magnetisierung 4a und Südpol-/Nordpol-Magnetisierung (4b).

Die Breite B_{J} der Polenden des erfindungsgemäßen Jochelements 1/2 und die Breite B_{M} der Magnete weisen ein Verhältnis von ca. 0,7 auf. Um die Sättungsneigung zu reduzieren, werden die Kanten entsprechend einer polygonen Form abgerundet. Die Polygonale Form kann mittels Simulation ermittelt werden unter Berücksichtigung der maximalen Feldstärke, die abhängig von der Materialwahl ist. Durch eine derartige Optimierung der polygon-förmigen Kanten der Polenden des erfindungsgemäßen U-förmigen Jochelements bilden sich keine Magnetfeldverdichtungen aus und die Feldstärke ist beim Übergang geringer.

### Bezugszeichenliste

- 1, 1a, 1b, ...:: Jochelemente
- 2, 2a, 2b, ...:: Jochelemente
- 3a:: (Joch-)Steg/Brücke eines Jochelements
- 3b:: (Joch-)Schenkel eines Jochelements
- 4, 4a, 4b:: Magnet (Nord-Süd bzw. Süd-Nord-Magnetisierung)
- 5:: Magnetflussleitmaterial
- 6:: Rückschlussblech
- 7:: Träger
- 8:: transversale Spule/Wicklung
- 9:: magnetischer Fluss

## Patentansprüche

1. Mehrphasige segmentierte Synchron-Maschine mit transversaler Flussführung bestehend aus mindestens zwei oder mehreren Doppelsegmenten, die Segmente eines Linearmotors bzw. Generators bilden oder Segmente eines rotierenden Motors bzw. Generators bilden, wobei die zwei oder mehreren Doppelsegmente aus einer Reihe von Permanentmagneten (4) und weichmagnetischen Jochen mit einer oder mehreren umlaufenden Wicklungen (8) bestehen, wobei durch einen bidirektionalen Aufbau jeweils zwei gleich große Segmente mit gleichgroßen Wicklungsströmen durchflossen werden, wobei durch eine phasenverschobene Anordnung der Joche das Schubmoment in der gleichen Bewegungsrichtung bewirkt wird, wobei die Joche umgeklappt und beieinander liegend angeordnet sind,
**dadurch gekennzeichnet, dass**
in einer Seitenansicht senkrecht zur Bewegungsrichtung Jochelemente (1a, 1b) der Joche U-förmig ausgebildet sind, die Pole der Jochelemente (1a, 1b) jeweils verbreitert als Polschuhe ausgeführt sind, die sich in den Innenbereich der Jochelemente (1a, 1b) erstrecken, und sich die Magnete (4) über jeweils ein Polende der Jochelemente (1a, 1b) erstrecken, wobei in einer Längssicht entlang der Bewegungsrichtung die Kanten der Polenden entsprechend einer polygonen Form abgerundet sind und die Breite (B_{J}) der Polenden der Jochelemente und die Breite (B_{M}) der Magnete (4) ein Verhältnis von ungefähr 0,7 aufweisen.
**dadurch gekennzeichnet, dass**

2. Synchron-Maschine mit transversaler Flussführung nach Anspruch 1, **dadurch gekennzeichnet, dass** die Magnete (4) derart angeordnet sind, dass von zwei Phasen eine Magnetanordnung umfassend die Magnete (4) und Magnetflussleitmaterialien (5) genutzt wird, wobei die magnetischen Flussmaterialien insbesondere durch gespritzte MIM-Technologie als grüne Materialien hergestellt sind oder gesinterte Materialien als Magnetflussleitmaterialien verwendet werden.

3. Synchron-Maschine mit transversaler Flussführung nach Anspruch 2, **dadurch gekennzeichnet, dass** die Magnetflussleitmaterialien (5) aus weichmagnetischen Bändern bestehen, die mit Bindemittel zusammengefügt sind, wobei die Magnetflussleitmaterialien (5) aus weichmagnetischen Bändern ferner mit einem Kunststoff zur Stabilisierung und Schutz umhüllt sind und der Stator mit einem wärmeleitenden Kunststoff umspritzt ist.

4. Synchron-Maschine mit transversaler Flussführung nach Anspruch 2 oder 3, **dadurch gekennzeichnet, dass** die Magnetanordnung (4) durch zwei Anordnungen von Jochelementen (1, 2) gemeinsam genutzt werden.

5. Synchron-Maschine mit transversaler Flussführung nach einem der Ansprüche 1 bis4 **dadurch gekennzeichnet, dass** die Maschine aus zwei oder mehreren miteinander verbundenen Rotorringen mit Magnetpolen (4a, 4b) besteht.

6. Synchron-Maschine mit transversaler Flussführung nach einem der Ansprüche 1 bis 5, **dadurch gekennzeichnet, dass** der segmentierte Aufbau der Maschine in mobile Fahrzeuge integrierbar ist.

7. Synchron-Maschine mit transversaler Flussführung nach einem der Ansprüche 1 bis 6, **dadurch gekennzeichnet, dass** die Maschine bei Windkraftanlagen im MW-Bereich eingesetzt wird.

## Claims

1. A multiphase segmented synchronous machine with transversal flux guidance consisting of at least two or more double segments which form segments of a linear motor or generator or segments of a rotating motor or generator, wherein the two or more double segments consist of a row of permanent magnets (4) and magnetically soft yokes with one or more circumferential windings (8), wherein as a result of a bidirectional structure in each case winding currents of the same magnitude flow through two equally large segments, wherein as a result of a phase-shifted arrangement of the yokes, the thrust torque is effected in the same direction of motion, wherein the yokes are arranged folded down and lying side by side, **characterized in that**
in a side view perpendicular to the direction of motion yoke elements (1a, 1b) of the yokes are formed U-shaped, wherein the poles of the yoke elements (1a, 1b) are each designed to be broadened as pole shoes which extend into the inner region of the yoke elements (1a, 1b), and wherein the magnets (4) respectively extend over a pole end of the yoke elements (1a, 1b), wherein in a lengthwise view along the direction of motion the edges of the pole ends are rounded according to a polygonal shape, and wherein the width (B_{J}) of the pole ends of the yoke elements and the width (B_{M}) of the magnets (4) have a ratio of about 0.7.

2. The synchronous machine with transversal flux guidance according to claim 1, **characterized in that** the magnets (4) are arranged in such a manner that from two phases a magnet arrangement comprising the magnets (4) und magnetic flux conducting materials (5) is used, wherein the magnetic flux materials are produced in particular by injection-moulded MIM technology as green materials or sintered materials are used as magnetic flux conducting materials.

3. The synchronous machine with transversal flux guidance according to claim 2, **characterized in that** the magnetic flux conducting materials (5) consist of magnetically soft strips which are joined together with binders, wherein the magnetic flux conducting materials (5) made of magnetically soft strips are further encased with a plastic for stabilization and protection and the stator is injection moulded by a heat-conducting plastic.

4. The synchronous machine with transversal flux guidance according to claim 2 or 3, **characterized in that** the magnet arrangement (4) is used by two arrangements of yoke elements (1, 2) jointly.

5. The synchronous machine with transversal flux guidance according to any one of claims 1 to 4, **characterized in that** the machine consists of two or more interconnected rotor rings with magnet poles (4a, 4b).

6. The synchronous machine with transversal flux guidance according to any one of claims 1 to 5, **characterized in that** the segmented structure of the machine can be integrated into mobile vehicles.

7. The synchronous machine with transversal flux guidance according to any one of claims 1 to 6, **characterized in that** the machine is used in wind turbines in the MW range.

## Revendications

1. Machine synchrone multiphases segmentée, avec guidage de flux transversal, constituée d'au moins deux ou de plusieurs doubles segments, formant des segments d'un moteur linéaire ou d'un générateur ou des segments d'un moteur ou générateur rotatif, les deux ou plusieurs doubles segments étant constitués d'une rangée d'aimants permanents (4) et de culasses magnétiques douces, avec un ou plusieurs enroulements (8) périphériques, grâce à une structure bidirectionnelle, chaque fois deux segmente de même grandeurs étant traversés par des courants d'enroulement de même valeur, grâce à une disposition décalée en phase des culasses, le couple de poussée étant provoqué dans la même direction de déplacement, les culasses étant placées en étant rabattues ou proches,
**caractérisée en ce que**
dans une vue latérale, à la perpendiculaire de la direction de déplacement, des éléments de culasse (1a, 1b) des culasses sont conçus en forme de U, **en ce que** les pôles des éléments de culasse (1a, 1b) sont conçus en étant respectivement élargis sous forme de pièces polaires qui s'étendent dans la zone intérieure des éléments de culasse (1a, 1b) et **en ce que** les aimants (4) s'étendent sur respectivement une extrémité de pôle des éléments de culasse (1a, 1b), dans une vue longitudinale le long de la direction de déplacement, les arêtes des extrémités de pôles étant arrondies selon une forme polygonale et la largeur (B_{J}) des extrémités de pôles des éléments de culasse et la largeur (B_{M}) des aimants (4) présentant un rapport d'environ 0,7.

2. Machine synchrone avec guidage de flux transversal selon la revendication 1, **caractérisée en ce que** les aimants (4) sont placés de telle sorte que parmi deux phases soit utilisé un agencement d'aimants comprenant les aimants (4) et des matières conductrices du flux d'aimantation (5),
les matières de flux magnétique étant fabriquées notamment par technologie d'injection MIM en tant que matières écologiques ou des matières frittées étant utilisées en tant que matières conductrices de flux d'aimantation.

3. Machine synchrone avec guidage de flux transversal selon la revendication 2, **caractérisée en ce que** les matières conductrices de flux d'aimantation (5) sont constituées de bandes magnétiques douces, qui sont assemblées à l'aide d'agents liants, les matières conductrices de flux d'aimantation (5) en bandes magnétiques douces étant enveloppées en outre d'une matière plastique assurant leur stabilisation et leur protection et le stator étant enrobé par injection d'une matière plastique conductrice thermique.

4. Machine synchrone avec guidage de flux transversal selon la revendication 2 ou 3, **caractérisée en ce que** l'agencement d'aimants (4) est utilisée en commun par des agencements d'éléments de culasse (1, 2).

5. Machine synchrone avec guidage de flux transversal selon l'une quelconque des revendications 1 à 4, **caractérisée en ce que** la machine est constituée de deux ou de plusieurs bagues de rotor dotées de pôles magnétiques (4a, 4b).

6. Machine synchrone avec guidage de flux transversal selon l'une quelconque des revendications 1 à 5, **caractérisée en ce que** la structure segmentée de la machine est intégrable dans des véhicules mobiles.

7. Machine synchrone avec guidage de flux transversal selon l'une quelconque des revendications 1 à 6, **caractérisée en ce que** la machine est utilisée dans des éoliennes dans la gamme MW.
